# EUROPEAN PATENT APPLICATION

(11) **EP 3 809 156 A1**
(43) Date of publication of application: **21.04.2021**
(21) Application number: 19819423.5
(22) Date of filing: 24.05.2019
(51) Int. Cl.: G01S 7/481, G01V 8/12, G02B 26/10

(54) **OBJECT DETECTION DEVICE AND PHOTODETECTOR**

(30) Priority: 14.06.2018 JP 2018114008
(71) Applicant: Panasonic Intellectual Property Management Co., Ltd., Osaka-shi, Osaka 540-6207 (JP)
(72) Inventor: KANO, Yasuyuki, Osaka-shi, Osaka 540-6207 (JP); KAWABUCHI, Kenichiro, Osaka-shi, Osaka 540-6207 (JP); ARAI, Akihiro, Osaka-shi, Osaka 540-6207 (JP)
(74) Representative: Appelt, Christian W.
(86) International application number: PCT/JP2019/020599
(87) International publication number: WO 2019/239845

(57) **Abstract**

The object detection device 10 includes: a light source 101 configured to emit laser light; a diffraction grating 104 configured to split the laser light emitted from the light source 101 into a plurality of laser light beams; a mirror 105 configured to reflect the laser light beams (Oth-order diffracted light beam L0, ±1st-order diffracted light beams L1 and L2) obtained through the splitting by the diffraction grating 104; a holder 120 integrally holding the diffraction grating 104 and the mirror 105; a motor 130 configured to rotate the holder 120; a photodetector 108 configured to receive reflected light beams (Ro to R2), of the respective laser light beams, reflected from an object; and a condensing lens 107 configured to condense the reflected light beams of the respective laser light beams onto the photodetector 108.

## Description

### TECHNICAL FIELD

The present invention relates to an object detection device that detects an object using light, and a photodetector suitable for use in the object detection device.

### BACKGROUND ART

To date, object detection devices that detect objects using light have been developed in various fields. In this type of object detection device, light is projected in a predetermined projection direction, and whether or not an object exists in the projection direction is determined on the basis of the presence/absence of reflected light of the light. Moreover, the distance to the object is measured on the basis of the projection timing of the light and the reception timing of the reflected light.

PATENT LITERATURE 1 below describes a distance measurement device including a plurality of light irradiation optical systems and a plurality of detection optical systems that detect return light that is light emitted by the light irradiation optical systems and reflected by an object to be returned. With this device, the distance to an object located in the space around the device is measured while changing the light emission direction by rotating a holder that holds the optical systems.

### CITATION LIST

### [PATENT LITERATURE]

[PTL 1] US Patent Application Publication No. 2010/0020306

### SUMMARY OF THE INVENTION

### PROBLEMS TO BE SOLVED BY THE INVENTION

With the device configured as described above, the space around the device is scanned with three light beams having projection directions different from each other, so that the ability to detect an object can be enhanced. However, since a pair of a light irradiation optical system and a detection optical system is disposed for each projection direction, the number of components is increased and the cost is increased.

In view of the above problem, an object of the present invention is to provide an object detection device capable of detecting an object by a plurality of light beams with a simple configuration, and a photodetector suitable for use in the object detection device.

### SOLUTION TO THE PROBLEMS

A first aspect of the present invention is directed to an object detection device for detecting an object using light. The object detection device according to the aspect includes: a light source configured to emit light; a splitting element configured to split the light emitted from the light source into a plurality of light beams; a mirror configured to reflect the light beams obtained through the splitting by the splitting element; a holder integrally holding the splitting element and the mirror; a drive unit configured to rotate the holder; a photodetector configured to receive reflected light beams, of the respective light beams, reflected from an object; and a condensing lens configured to condense the reflected light beams of the respective light beams onto the photodetector.

In the object detection device according to the aspect, the light beams obtained through the splitting by the splitting element are projected, and the reflected light beams of the respective light beams obtained through the splitting are received by the photodetector. Thus, it is not necessary to individually provide an optical system for each projection direction, and an object can be detected by a plurality of light beams having different projection directions with a very simple configuration.

A second aspect of the present invention is directed to a photodetector. The photodetector according to the aspect includes a first sensor and a second sensor disposed in an arc shape around the first sensor.

For example, in the case where the splitting element of the object detection device according to the first aspect is a diffraction grating, when an optical system is configured such that a Oth-order diffracted light beam travels along the rotation center axis of the mirror, a reflected light beam of another diffracted light beam of an order different from that of the Oth-order diffracted light beam rotates on the light receiving surface of the photodetector around the incident position of the Oth-order diffracted light beam as the mirror rotates. Meanwhile, in the photodetector according to the second aspect, the second sensor is disposed in an arc shape around the first sensor. Therefore, by using the photodetector according to the second aspect as the photodetector of the object detection device according to the first aspect, the movement locus of the reflected light beam of the other order of diffracted light beam rotating as the mirror rotates can be caused to extend along the second sensor having an arch shape, while the reflected light beam of the Oth-order diffracted light beam is received by the first sensor. Accordingly, each of the reflected light beam of the Oth-order diffracted light beam and the reflected light beam of the other order of diffracted light beam can be smoothly received by the photodetector according to the second aspect, and a detection signal for each reflected light beam can be generated.

### ADVANTAGEOUS EFFECTS OF THE INVENTION

As described above, according to the present invention, it is possible to provide an object detection device capable of detecting an object by a plurality of light beams with a simple configuration, and a photodetector suitable for use in the object detection device.

The effects and the significance of the present invention will be further clarified by the description of the embodiment below. However, the embodiment below is merely an example for implementing the present invention. The present invention is not limited by the description of the embodiment below in any way.

### BRIEF DESCRIPTION OF THE DRAWINGS

[FIG. 1] FIGS. 1(a) to 1(c) are each a perspective view showing a configuration of an object detection device according to an embodiment.
[FIG. 2] FIGS. 2(a) and 2(b) are each a cross-sectional view showing the configuration of the object detection device according to the embodiment.
[FIG. 3] FIG. 3 is a graph showing emission loci of laser light beams in the object detection device according to the embodiment.
[FIG. 4] FIGS. 4(a) to 4(c) are each a diagram schematically showing a configuration of a photodetector according to the embodiment and a movement state of reflected light beams of respective diffracted light beams on the photodetector.
[FIG. 5] FIG. 5 is a block diagram showing the configuration of the object detection device according to the embodiment.
[FIG. 6] FIGS. 6(a) to 6(f) are each a diagram schematically showing a configuration of a photodetector according to Modification 1 and a movement state of reflected light beams of respective diffracted light beams on the photodetector.
[FIG. 7] FIG. 7 is a block diagram showing a configuration of an object detection device according to Modification 1.
[FIG. 8] FIGS. 8(a) and 8(b) are each a cross-sectional view showing a configuration of an object detection device according to Modification 2.
[FIG. 9] FIGS. 9(a) to 9(c) are each a diagram schematically showing a configuration of a photodetector according to Modification 2 and a movement state of reflected light beams of respective diffracted light beams on the photodetector.
[FIG. 10] FIGS. 10(a) to 10(d) are each a diagram schematically showing a configuration of a photodetector according to Modification 3 and a movement state of reflected light beams of respective diffracted light beams on the photodetector. FIG. 10(e) is a perspective view showing a configuration of an object detection device according to Modification 4.
[FIG. 11] FIG. 11(a) is a cross-sectional view showing a configuration of an object detection device according to Modification 5. FIG. 11(b) is a plan view schematically showing a configuration of an optical path switching mirror according to Modification 5.

It should be noted that the drawings are solely for description and do not limit the scope of the present invention by any degree.

### BEST MODE FOR CARRYING OUT THE INVENTION

Hereinafter, an embodiment of the present invention will be described with reference to the drawings. In the drawings, X, Y, and Z axes that are orthogonal to each other are additionally shown. The Z-axis direction is the height direction of an object detection device, and the X-axis positive direction is the front direction of the object detection device.

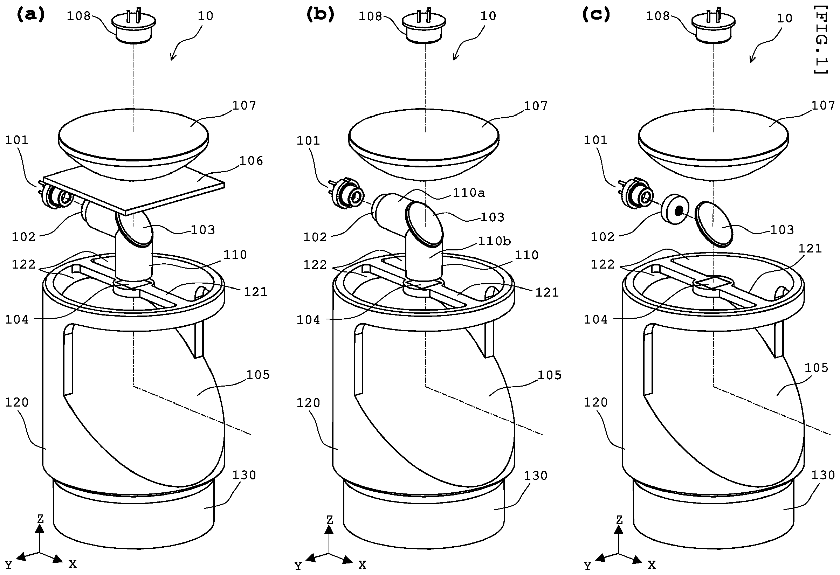

FIGS. 1(a) to 1(c) are perspective views showing a configuration of an object detection device 10. FIGS. 1(a) to 1(c) each show a state of the object detection device 10 in the case where a mirror 105 is at a neutral position. The "neutral position" is a position at which the mirror 105 is tilted at 45 degrees in a direction parallel to the Z-X plane from a state of being perpendicular to the X axis. In this state, the projection direction of laser light is the front direction (X-axis positive direction).

For convenience, in FIG. 1(b), a filter 106 is omitted from the configuration shown in FIG. 1(a), and, in FIG. 1(c), a tubular body 110 is further omitted. The object detection device 10 shown in FIG. 1(a) is a completed product.

Referring to FIGS. 1(a) to 1(c), the object detection device 10 includes a light source 101, a collimator lens 102, a bending mirror 103, a diffraction grating 104, the mirror 105, the filter 106, a condensing lens 107, and a photodetector 108.

The light source 101 emits infrared laser light. The light source 101 is, for example, a semiconductor laser that emits laser light of 905 nm. The light source 101 is disposed such that the emission optical axis thereof is parallel to the X axis. The collimator lens 102 converts the laser light emitted from the light source 101 into parallel light.

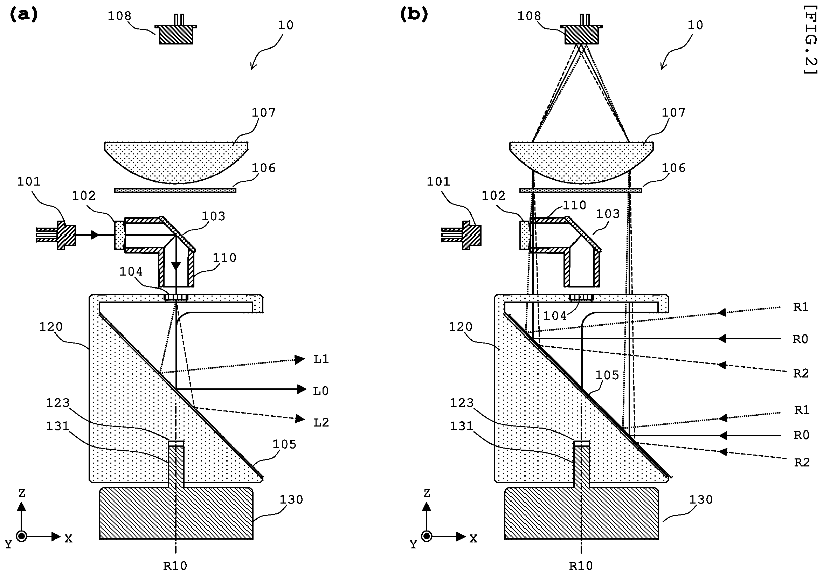

The light source 101 and the collimator lens 102 are disposed so as to be aligned in the X-axis direction. More specifically, the light source 101 and the collimator lens 102 are disposed such that the emission optical axis of the light source 101 and the optical axis of the collimator lens 102 coincide with each other. In addition, the light source 101 is disposed such that the emission optical axis thereof is orthogonal to a rotation center axis R10 (see FIGS. 2(a) and 2(b)) of the mirror 105. The laser light emitted from the light source 101 is converted into parallel light by the collimator lens 102 and then reflected in the Z-axis negative direction by the bending mirror 103.

The collimator lens 102 and the bending mirror 103 are mounted on the tubular body 110. The tubular body 110 has a shape in which a hollow cylindrical portion 110a having a central axis parallel to the X axis and a hollow cylindrical portion 110b having a central axis parallel to the Z axis are integrally connected to each other. A connection portion of the cylindrical portions 110a and 110b is open, and the bending mirror 103 is mounted at the connection portion such that a reflecting surface thereof is located within the tubular body 110. The bending mirror 103 is mounted on the tubular body 110 in a state where the bending mirror 103 is tilted at 45 degrees in the direction parallel to the Z-X plane from a state of being perpendicular to the Z axis. The collimator lens 102 is mounted at the opening on the light source 101 side of the tubular body 110.

The laser light converted into parallel light by the collimator lens 102 travels through the inside of the tubular body 110 (cylindrical portion 110a) and is incident on the bending mirror 103. Then, the laser light is reflected in the Z-axis negative direction by the bending mirror 103 and travels through the opening on the diffraction grating 104 side of the tubular body 110. Thus, the laser light is incident on the diffraction grating 104. The laser light is incident on the diffraction grating 104 along the rotation center axis R10 (see FIGS. 2(a) and 2(b)) of the mirror 105.

The diffraction grating 104 splits the laser light incident as described above, by diffraction. The diffraction direction of the diffraction grating 104 is parallel to the projection direction (X-axis direction) of the laser light by the mirror 105. That is, the diffraction grating 104 splits the laser light from the light source 101 such that laser light beams obtained through the splitting by diffraction are incident on the mirror 105 so as to be separated from each other in a direction parallel to the rotation center axis R10 (see FIGS. 2(a) and 2(b)) of the mirror 105.

In the present embodiment, the diffraction grating 104 is configured such that the diffraction efficiencies of a 0th-order diffracted light beam and ±1st-order diffracted light beams are high, and the diffraction efficiencies of the other orders of diffracted light beams are substantially zero. The diffraction efficiencies of the Oth-order diffracted light beam and the ±1st-order diffracted light beams are set to be approximately equal. The diffraction grating 104 is composed of, for example, a step-type diffraction grating. The diffraction grating 104 may be a blaze-type diffraction grating.

The mirror 105 reflects the laser light beams (0th-order diffracted light beam and ±1st-order diffracted light beams) obtained through the splitting by the diffraction grating 104, in the projection direction. When the mirror 105 is at the neutral position, the mirror 105 is tilted at 45 degrees in the direction parallel to the Z-X plane from a state of being perpendicular to the X axis. Since the laser light is incident on the diffraction grating 104 along the rotation center axis R10 (see FIGS. 2(a) and 2(b)) of the mirror 105 as described above, the Oth-order diffracted light beam that passes through the diffraction grating 104 without being diffracted is incident on the mirror 105 along the rotation center axis R10.

The diffraction grating 104 and the mirror 105 are held by the holder 120. The holder 120 is a cylindrical frame-shaped member having an upper surface and a side surface that are open. A beam portion 121 extending in the X-axis direction at the neutral position is formed in the upper surface of the holder 120, and the diffraction grating 104 is mounted at the center of the beam portion 121. The beam portion 121 is disposed at the center position in the Y-axis direction of the upper surface of the holder 120. There are openings 122 formed on both sides in the Y-axis direction of the beam portion 121. The laser light beams (Oth-order diffracted light beam and ±1st-order diffracted light beams) reflected by the mirror 105 are projected in the X-axis positive direction from the opening in the side surface of the holder 120.

FIGS. 2(a) and 2(b) are each a cross-sectional view showing the configuration of the object detection device 10.

FIGS. 2(a) and 2(b) each show a cross-section obtained by cutting the configuration in FIG. 1(a) at the intermediate position in the Y-axis direction along a plane parallel to the X-Z plane. FIG. 2(a) shows laser light beams (diffracted light beams) L0 to L2 projected to a target region, and FIG. 2(a) shows reflected light beams R0 to R2, of the respective laser light beams, reflected by an object that exists in the target region. L0, L1, and L2 are a Oth-order diffracted light beam, a +lst-order diffracted light beam, and a -1st-order diffracted light beam that are generated by the diffraction grating 104, respectively. In addition, R0, R1, and R2 are reflected light beams, of the Oth-order diffracted light beam L0, the +lst-order diffracted light beam L1, and the -1st-order diffracted light beam L2, reflected by the object, respectively.

As shown in FIG. 2(a), the laser light emitted from the light source 101 is split into the 0th-order diffracted light beam L0, the +1st-order diffracted light beam L1, and the -1st-order diffracted light beam L2 by the diffraction grating 104. Among these beams, the 0th-order diffracted light beam L0 is incident on the mirror 105 so as to be parallel to the Z axis, and thus reflected in the X-axis direction (horizontal direction) by the mirror 105. On the other hand, the +lst-order diffracted light beam L1 and the -1st-order diffracted light beam L2 are each incident on the mirror 105 so as to be tilted by a predetermined diffraction angle in a direction parallel to the X-Z plane from a state of being parallel to the Z axis. Therefore, the +lst-order diffracted light beam L1 and the -1st-order diffracted light beam L2 are reflected by the mirror 105 in directions tilted in the Z-axis positive and negative directions from the X-axis direction, respectively.

Thus, the three laser light beams (Oth-order diffracted light beam L0, +lst-order diffracted light beam L1, and -1st-order diffracted light beam L2) separated in the vertical direction (Z-axis direction) are projected to the target region.

As shown in FIG. 2(a), the holder 120 has a circular hole 123 formed at the center position on the X-Y plane, and a rotation shaft 131 of a motor 130 is fitted and connected to the hole 123. When the motor 130 is driven, the holder 120 rotates about the rotation center axis R10, and the mirror 105 and the diffraction grating 104 rotate accordingly.

Since the mirror 105 and the diffraction grating 104 integrally rotate, the relative positional relationships of the Oth-order diffracted light beam L0, the +lst-order diffracted light beam L1, and the -1st-order diffracted light beam L2 relative to the mirror 105 remain unchanged even when the mirror 105 rotates. Therefore, the angles of the projection directions of the Oth-order diffracted light beam L0, the +lst-order diffracted light beam L1, and the -1st-order diffracted light beam L2 relative to a horizontal plane (X-Y plane) remain unchanged even when the mirror 105 rotates.

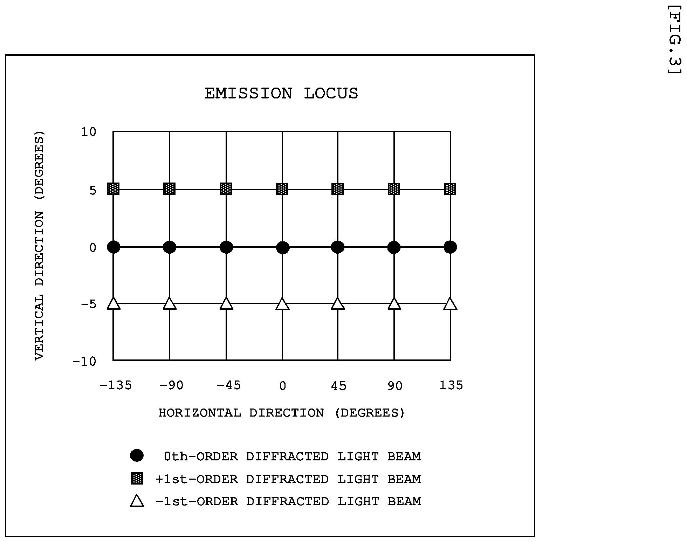

FIG. 3 is a graph showing emission loci of the laser light beams (Oth-order diffracted light beam L0, +lst-order diffracted light beam L1, -1st-order diffracted light beam L2) in the object detection device 10.

In FIG. 3, the horizontal axis indicates the angle of a projection direction in the horizontal direction, relative to the front direction, and the vertical axis indicates the angle of a projection direction in the vertical direction, relative to the horizontal plane. The angles of the projection directions of the Oth-order diffracted light beam L0, the +lst-order diffracted light beam L1, and the -1st-order diffracted light beam L2 relative to the horizontal plane (X-Y plane) are set to 0 degrees, +5 degrees, and -5 degrees, respectively. That is, each of the diffraction angles of the +lst-order diffracted light beam L1 and the -1st-order diffracted light beam L2 in the diffraction grating 104 is 5 degrees.

As shown in FIG. 3, in the present embodiment, the three laser light beams (Oth-order diffracted light beam L0, +lst-order diffracted light beam L1, and -1st-order diffracted light beam L2) separated in the vertical direction (Z-axis direction) can be projected while being rotated about the rotation center axis R10. In FIG. 3, the range of -135 degrees to +135 degrees is shown as the range of the horizontal axis. However, this is an example, and the rotation range of the 0th-order diffracted light beam L0, the +lst-order diffracted light beam L1, and the -1st-order diffracted light beam L2 is not limited thereto. For example, the rotation range of the 0th-order diffracted light beam L0, the +lst-order diffracted light beam L1, and the -1st-order diffracted light beam L2 may be set to a range wider than the range of -135 degrees to +135 degrees.

Referring back to FIG. 2(b), when an object exists in the projection directions of the Oth-order diffracted light beam L0, the +lst-order diffracted light beam L1, and the -1st-order diffracted light beam L2, the reflected light beams R0, R1, and R2, of the respective diffracted light beams, reflected by the object travel backward on the projection optical path and are incident on the mirror 105. In FIG. 2(b), two straight lines marked with the reflected light beam R0 indicate the outermost light beams of the reflected light beam that can be taken into the condensing lens 107. The same applies to straight lines marked with the reflected light beams R1 and R2. Here, the distance to the object is long. Thus, the reflected light beams R0, R1, and R2 are indicated as parallel light beams having predetermined beam diameters.

Since the projection directions of the Oth-order diffracted light beam L0, the +lst-order diffracted light beam L1, and the -1st-order diffracted light beam L2 projected to the target region are different from each other as described above, the incident directions of the reflected light beams R0, R1, and R2 incident on the mirror 105 are also different from each other. That is, since the Oth-order diffracted light beam L0 is projected in the horizontal direction, the reflected light beam R0 of the Oth-order diffracted light beam L0 travels backward from the target region in the horizontal direction and is incident on the mirror 105.

On the other hand, since the +lst-order diffracted light beam L1 is projected in a direction tilted in the vertically upward direction (Z-axis positive direction) at a predetermined angle relative to the horizontal direction, the reflected light beam R1 of the +lst-order diffracted light beam L1 travels backward from the target region in a direction tilted in the vertically downward direction (Z-axis negative direction) at the predetermined angle relative to the horizontal direction and is incident on the mirror 105.

Moreover, since the -1st-order diffracted light beam L2 is projected in a direction tilted in the vertically downward direction (Z-axis negative direction) at a predetermined angle relative to the horizontal direction, the reflected light beam R2 of the -1st-order diffracted light beam L2 travels backward from the target region in a direction tilted in the vertically upward direction (Z-axis positive direction) at the predetermined angle relative to the horizontal direction and is incident on the mirror 105.

Thereafter, the reflected light beams R1, R2, and R3 are reflected by the mirror 105 and travel toward the upper surface of the holder 120. Then, most of the reflected light beams R1, R2, and R3 is incident on the filter 106 through the openings 122 (see FIG. 1(a)) in the upper surface of the holder 120, and is further incident on the condensing lens 107 through the filter 106.

The filter 106 is a band pass filter that transmits light in the wavelength band of the laser light emitted from the light source 101 and that blocks light in the other wavelength bands. Therefore, the reflected light beams R1, R2, and R3 incident on the filter 106 pass through the filter 106 as they are, and are incident on the condensing lens 107. The condensing lens 107 converges the incident reflected light beams R1, R2, and R3 onto a light receiving surface of the photodetector 108.

Since the angles at which the reflected light beams R1, R2, and R3 are incident on the mirror 105 are different from each other as described above, the reflected light beams R1, R2, and R3 are also incident on the condensing lens 107 at angles different from each other. The optical axis of the condensing lens 107 coincides with the rotation center axis R10. Therefore, the reflected light beam R0 of the Oth-order diffracted light beam L0 is incident on the condensing lens 107 so as to be parallel to the optical axis of the condensing lens 107. On the other hand, the reflected light beam R1 of the +lst-order diffracted light beam L1 is incident on the condensing lens 107 so as to be tilted in the X-axis positive direction from a state of being parallel to the optical axis of the condensing lens 107. The reflected light beam R2 of the -1st-order diffracted light beam L2 is incident on the condensing lens 107 so as to be tilted in the X-axis negative direction from a state of being parallel to the optical axis of the condensing lens 107.

Since the incident directions of the reflected light beams R0, R1, and R2 on the condensing lens 107 are different from each other as described above, the convergence positions of the reflected light beams R0, R1, and R2 are shifted from each other in the X-axis direction on the light receiving surface of the photodetector 108. In addition, the convergence position of the reflected light beam R0 is fixed even when the mirror 105 rotates, but the convergence positions of the reflected light beams R1 and R2 rotate as the mirror 105 rotates. The photodetector 108 is configured to be able to receive the reflected light beams R0, R1, and R2 whose convergence positions are shifted from each other and rotate as described above.

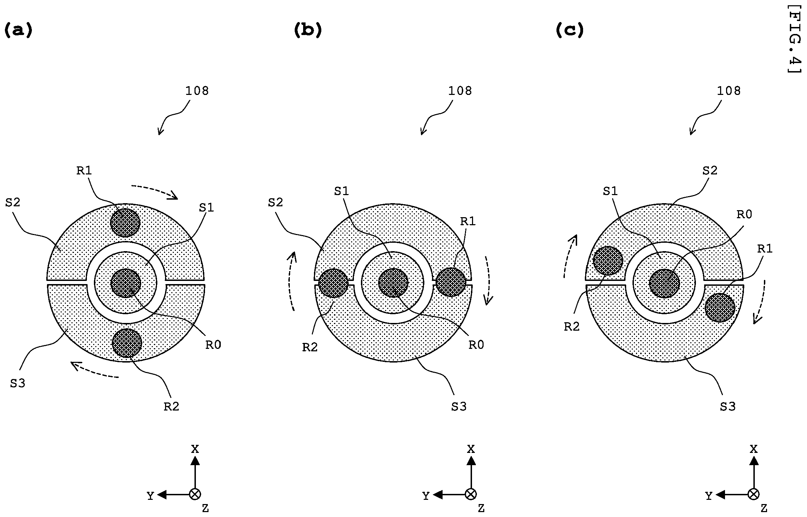

FIGS. 4(a) to 4(c) are each a diagram schematically showing a configuration of the photodetector 108 and a movement state of the reflected light beams of the respective diffracted light beams on the photodetector 108.

The photodetector 108 includes a sensor S1 which receives the reflected light beam R0, of the Oth-order diffracted light beam L0, from the object, and sensors S2 and S3 which are disposed around the sensor S1 and which receive the reflected light beams R1 and R2, of the +lst-order diffracted light beam L1 and the -1st-order diffracted light beam L2, from the object. The sensors S2 and S3 are disposed in an arc shape around the sensor S1, which receives the reflected light beam R0 of the Oth-order diffracted light beam L0, so as to extend along the movement loci of the reflected light beams R1 and R2 of the +lst-order diffracted light beam L1 and the -1st-order diffracted light beam L2 which rotate as the mirror 105 rotates. In addition, the sensors S2 and S3 are two sensors separate from each other in the movement direction of the reflected light beams R1 and R2.

In this configuration, a detection signal for the reflected light beam R0 is outputted from the sensor S1. On the other hand, a detection signal for the reflected light beam R1 is outputted from one of the sensors S2 and S3, and a detection signal for the reflected light beam R2 is outputted from the other of the sensors S2 and S3.

For example, when the reflected light beams R1 and R2 are incident on the photodetector 108 as shown in FIG. 4(a), the detection signal for the reflected light beam R1 is outputted from the sensor S2, and the detection signal for the reflected light beam R2 is outputted from the sensor S3. Thereafter, when the reflected light beams R1 and R2 rotate clockwise to be equally located at the boundaries between the sensors S2 and S3 as shown in FIG. 4(b), the output of the detection signals for the reflected light beams R1 and R2 is stopped. When the reflected light beams R1 and R2 further rotate clockwise to be incident on the photodetector 108 as shown in FIG. 4(c), the detection signal for the reflected light beam R1 is outputted from the sensor S3, and the detection signal for the reflected light beam R2 is outputted from the sensor S2.

As described above, the detection signal for the reflected light beam R0 is acquired from the sensor S1, and the detection signals for the reflected light beams R1 and R2 are selectively acquired from the sensors S2 and S3, respectively.

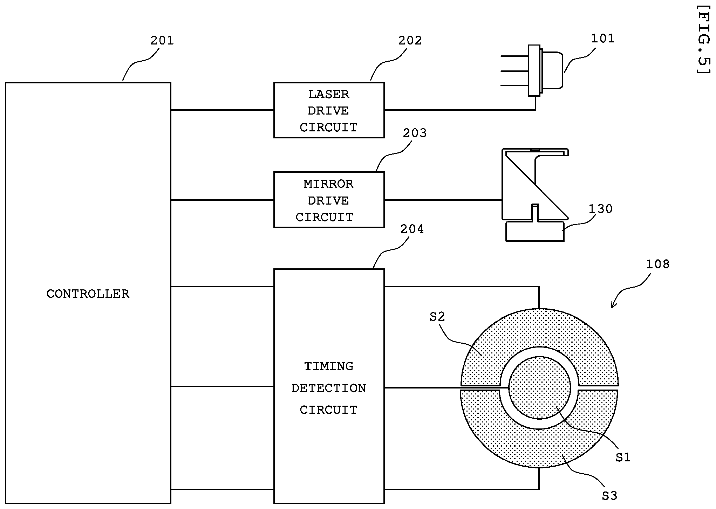

FIG. 5 is a block diagram showing the configuration of the object detection device 10.

The object detection device 10 includes a controller 201, a laser drive circuit 202, a mirror drive circuit 203, and a timing detection circuit 204 as components of a circuitry.

The controller 201 includes a microcomputer and a memory, and controls each part according to a program stored in the memory. The laser drive circuit 202 drives the light source 101 on the basis of a control signal from the controller 201. The mirror drive circuit 203 drives the motor 130 to rotate the mirror 105 on the basis of a control signal from the controller 201.

The timing detection circuit 204 detects the timings when these sensors S1 to S3 receive the reflected light beams R0 to R2, respectively, on the basis of the detection signals from the sensors S1 to S3 of the photodetector 108. The timing detection circuit 204 outputs detection pulses of the reflected light beams R0 to R2 to the controller 201 at the timings when the sensors S1 to S3 receive the reflected light beams R0 to R2, respectively.

During object detection operation, the controller 201 controls the mirror drive circuit 203 to rotate the mirror 105 in the horizontal direction. Furthermore, the controller 201 controls the laser drive circuit 202 to cause the light source 101 to emit laser light in a pulsed manner every predetermined rotation angle in the horizontal direction. Then, at each rotation angle of the mirror 105, the controller 201 determines whether or not the reflected light beams R0 to R2 of the laser light (Oth-order diffracted light beam L0, +lst-order diffracted light beam L1, -1st-order diffracted light beam L2) emitted from the light source 101 are received by the photodetector 108, on the basis of signals from the timing detection circuit 204.

When the reflected light beams R0 to R2 are received by the photodetector 108 at each rotation angle of the mirror 105, the controller 201 determines that an object exists in the directions of the Oth-order diffracted light beam L0, the +1st-order diffracted light beam L1, and the -1st-order diffracted light beam L2 with respect to the vertical angle, at each rotation angle. Furthermore, the controller 201 measures the distance to the object in the projection directions of the 0th-order diffracted light beam L0, the +lst-order diffracted light beam L1, and the -1st-order diffracted light beam L2 on the basis of the time differences between the timing when the laser light is emitted from the light source 101 and the reception timings of the reflected light beams R0 to R2 detected by the timing detection circuit 204. In this manner, the object detection operation in each projection direction is performed.

As described with reference to FIGS. 4(a) to 4(c), the controller 201 selectively switches the sensors S2 and S3 for acquiring the detection signals for the reflected light beams R1 and R2, as the reflected light beams R1 and R2 move.

That is, the controller 201 selectively assigns timing detection signals outputted from the timing detection circuit 204, as timing detection signals for the reflected light beams R1 and R2, in accordance with the rotation position of the mirror 105 so as to acquire timing detection signals corresponding to sensors on which the reflected light beams R1 and R2 are incident, respectively, of the sensors S2 and S3. Accordingly, the controller 201 can appropriately acquire the timing detection signals for the reflected light beams R1 and R2, which rotate as the mirror 105 rotates, by the two sensors S2 and S3 shown in FIGS. 4(a) to 4(c).

### <Effects of Embodiment>

According to the above embodiment, the following effects are achieved.

The laser light beams (Oth-order diffracted light beam L0, +lst-order diffracted light beam L1, -1st-order diffracted light beam L2) obtained through the splitting by the diffraction grating 104 are projected to the target region, and the reflected light beams R0, R1, and R2 of the respective laser light beams (Oth-order diffracted light beam L0, +lst-order diffracted light beam L1, -1st-order diffracted light beam L2) obtained through the splitting are received by the photodetector 108. Thus, it is not necessary to individually provide an optical system for each projection direction, and an object can be detected by a plurality of laser light beams having different projection directions with a very simple configuration.

As shown in FIGS. 4(a) to 4(c), the photodetector 108 includes the sensor S1 which receives the reflected light beam R0, of the Oth-order diffracted light beam L0, from the object, and the sensors S2 and S3 which are disposed around the sensor S1 and which receive the reflected light beams R1 and R2, of the ±1st-order diffracted light beams L1 and L2, from the object. Since the sensors S2 and S3 are disposed around the sensor S1 as described above, the reflected light beams R1 and R2 which rotate as the mirror 105 rotates can be received by the sensors S2 and S3.

As shown in FIGS. 4(a) to 4(c), the sensors S2 and S3 are disposed in an arc shape around the sensor S1, which receives the reflected light beam R0 of the Oth-order diffracted light beam L0, so as to extend along the movement loci of the reflected light beams R1 and R2 of the ±1st-order diffracted light beams L1 and L2 which rotate as the mirror 105 rotates. By forming the sensors S2 and S3 in an arc shape as described above, the areas of the sensors S2 and S3 can be limited to areas corresponding to the movement loci of the reflected light beams R1 and R2. Accordingly, the sensors S2 and S3 can be inhibited from receiving unnecessary light such as stray light, so that the detection accuracy of the reflected light beams R1 and R2 can be enhanced.

As described with reference to FIGS. 4(a) to 4(c), the controller 201 selectively switches the sensors S2 and S3 for acquiring the detection signals for the respective reflected light beams R1 and R2, as the reflected light beams R1 and R2 rotationally move. Accordingly, the controller 201 can appropriately acquire the detection signals for the reflected light beams R1 and R2, which rotate as the mirror 105 rotates, by the two sensors S2 and S3 shown in FIGS. 4(a) to 4(c).

As shown in FIG. 2(a), the diffraction grating 104 (splitting element) splits the laser light from the light source 101 such that the laser light beams (Oth-order diffracted light beam L0, +lst-order diffracted light beam L1, and -1st-order diffracted light beam L2) obtained through the splitting are incident on the mirror 105 so as to be separated from each other in the direction parallel to the rotation center axis R10 of the mirror 105. Accordingly, as shown in FIG. 3, the multiple laser light beams (Oth-order diffracted light beam L0, +lst-order diffracted light beam L1, -1st-order diffracted light beam L2) obtained through the splitting can be projected in projection directions different in the vertical direction. Therefore, the detection range can be widened in the vertical direction.

In addition to the above, in the present embodiment, the tubular body 110 is provided as shown in FIG. 1(a) to FIG. 2(b). Therefore, for example, reflected light, of the laser light, reflected by the incident surface of the diffraction grating 104, scattered light of the laser light generated at the emission surfaces of the bending mirror 103 and the collimator lens 102, and the like can be prevented from being incident on the condensing lens 107 and condensed on the photodetector 108. Therefore, the object detection accuracy can be enhanced by using the tubular body 110.

Although the embodiment of the present invention has been described above, the present invention is not limited to the above embodiment, and various other modifications may be made.

### <Modification 1>

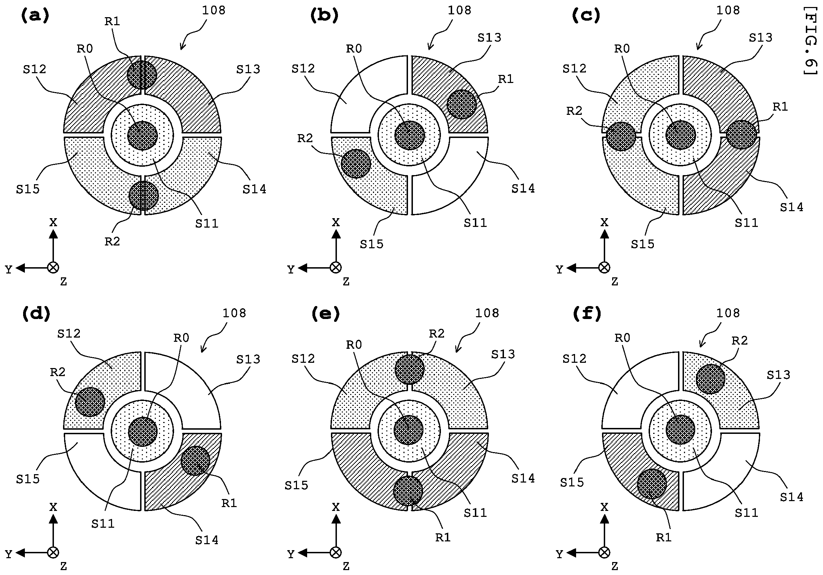

FIGS. 6(a) to 6(f) are each a diagram schematically showing a configuration of the photodetector 108 according to Modification 1 and a movement state of the reflected light beams R0 to R2 of the respective diffracted light beams on the photodetector 108.

In Modification 1, four sensors S12 to S15 are disposed around a sensor S11 which receives the reflected light beam R0. That is, in Modification 1, the number of divisions of the sensor for receiving the reflected light beams R1 and R2 is increased as compared to the above embodiment. The sensors S12 to S15 are disposed in an arc shape around the sensor S11 so as to extend along the movement loci of the reflected light beams R1 and R2. The configuration other than the photodetector 108 is the same as the configuration in FIGS. 1(a) to 1(c) and FIGS. 2(a) and 2(b) shown in the above embodiment 1.

In FIGS. 6(a) to 6(f), among the sensors S12 to S15, the sensors hatched by oblique lines are sensors used for detecting the reflected light beam R1, and the sensors hatched by dots are sensors used for detecting the reflected light beam R2. That is, in the state of FIG. 6(a), the sensors S12 and S13 are used for receiving the reflected light beam R1, and the sensors S14 and S15 are used for detecting the reflected light beam R2.

In the state of FIG. 6(b), the sensor S13 is used for receiving the reflected light beam R1, and the sensor S15 is used for detecting the reflected light beam R2. In the state of FIG. 6(c), the sensors S13 and S14 are used for receiving the reflected light beam R1, and the sensor S15 and S12 are used for detecting the reflected light beam R2. In the state of FIG. 6(d), the sensor S14 is used for receiving the reflected light beam R1, and the sensor S12 is used for detecting the reflected light beam R2. In the state of FIG. 6(e), the sensors S12 and S13 are used for receiving the reflected light beam R2, and the sensors S14 and S15 are used for detecting the reflected light beam R1. In the state of FIG. 6(f), the sensor S13 is used for receiving the reflected light beam R2, and the sensor S15 is used for detecting the reflected light beam R1.

As described above, in Modification 2, the sensors used for detecting the reflected light beams R1 and R2 are selectively switched from among the sensors S12 to S15.

In the configuration of Modification 2, even when the reflected light beams R1 and R2 are located at the boundary positions between the sensors as shown in FIGS. 6(a), 6(c), and 6(e), detection signals for the reflected light beams R1 and R2 can be acquired. This is the difference from the configuration in FIGS. 4(a) to 4(c) in the above embodiment. That is, according to the configuration of Modification 2, even when the reflected light beams R1 and R2 are incident at the boundary positions between the sensors, loss or crosstalk of a detection signal does not occur, and the detection signals for the reflected light beams R1 and R2 can be stably acquired. In addition, the areas of the sensors S12 to S15 are smaller than those of the sensors S2 and S3 shown in FIGS. 4(a) to 4(c), and thus the influence of unnecessary light such as stray light on the detection signals for the reflected light beams R1 and R2 can be suppressed.

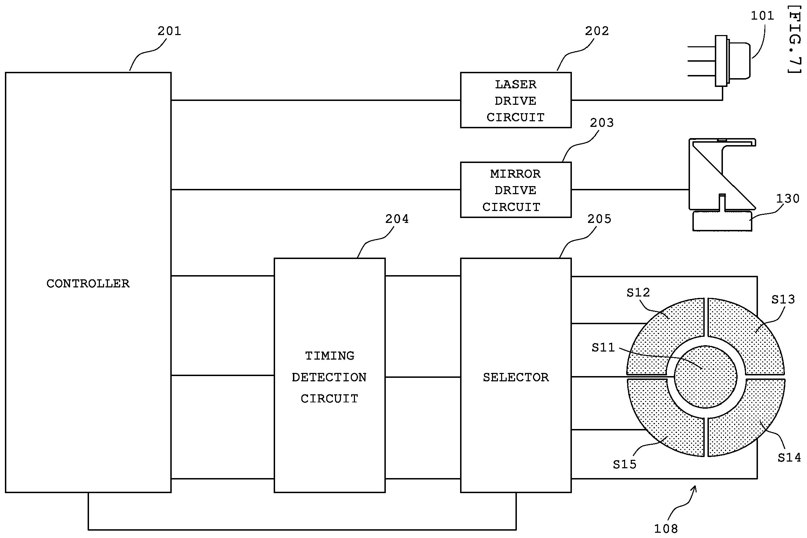

FIG. 7 is a block diagram showing a configuration of the object detection device 10 according to Modification 1.

Compared to the configuration in FIG. 5, a selector 205 is added. The other configuration is the same as in FIG. 5.

Under control from the controller 201, the selector 205 selects predetermined detection signals from among detection signals outputted from the sensors S12 to S15, respectively, and generates a detection signal for the reflected light beam R1 and a detection signal for the reflected light beam R2. Specifically, the controller 201 causes the selector 205 to: select the detection signals from the sensors on which the reflected light beams R1 and R2 are incident, respectively, from among the detection signals outputted from the sensors S12 to S15, respectively; and generate detection signals for the reflected light beams R1 and R2.

For example, at the timing of FIG. 6(a), the controller 201 causes the selector 205 to select the detection signals from the sensors S12 and S13 and generate a detection signal for the reflected light beam R1. In this case, the selector 205 adds the detection signals from the sensors S12 and S13 to generate a detection signal for the reflected light beam R1, and outputs the generated detection signal to the timing detection circuit 204. In addition, at the timing of FIG. 6(b), the controller 201 causes the selector 205 to select the detection signal from the sensor S13 and generate a detection signal for the reflected light beam R1. In this case, the selector 205 outputs the detection signal from the sensor S13, as a detection signal for the reflected light beam R1, to the timing detection circuit 204 as it is.

The controller 201 determines which of the sensors S12 to S15 each of the reflected light beams R1 and R2 is incident on, for example, on the basis of the rotation position of the mirror 105. The controller 201 may determine which of the sensors S12 to S15 each of the reflected light beams R1 and R2 is incident on, by further taking into consideration which of the sensors S12 to S15 each detection signal is outputted from. Then, the controller 201 controls the selector 205 as described above, on the basis of the result of the determination, to cause the selector 205 to output the detection signals corresponding to the reflected light beams R1 and R2, to the timing detection circuit 204. It should be noted that the selector 205 outputs the detection signal from the sensor S11, as a detection signal for the reflected light beam R0, to the timing detection circuit 204 as it is.

The timing detection circuit 204 detects the reception timings of the reflected light beams R0, R1, and R2 on the basis of the detection signals inputted thereto from the selector 205. Then, the timing detection circuit 204 outputs detection pulses of the reflected light beams R0 to R2 to the controller 201 at the detected reception timings of the reflected light beams R0 to R2.

During object detection operation, similar to the above embodiment, the controller 201 causes laser light to be emitted from the light source 101 in a pulsed manner every predetermined rotation angle in the horizontal direction while rotating the mirror 105 in the horizontal direction. Then, at each rotation angle of the mirror 105, the controller 201 determines whether or not the reflected light beams R0 to R2 are received by the photodetector 108, on the basis of the signals from the timing detection circuit 204. When the reflected light beams R0 to R2 are received, the controller 201 determines that an object exists in the projection directions of the Oth-order diffracted light beam L0, the +lst-order diffracted light beam L1, and the -1st-order diffracted light beam L2.

Furthermore, the controller 201 measures the distance to the object in the projection directions of the Oth-order diffracted light beam L0, the +lst-order diffracted light beam L1, and the -1st-order diffracted light beam L2 on the basis of the time differences between the timing when the laser light is emitted from the light source 101 and the reception timings of the reflected light beams R0 to R2 detected by the timing detection circuit 204.

In Modification 1 as well, the same advantageous effects as those of the above embodiment can be achieved. In addition, according to Modification 1, as described above, even when the reflected light beams R1 and R2 are incident at the boundary positions between the sensors, loss or crosstalk of a detection signal does not occur, and the detection signals for the reflected light beams R1 and R2 can be stably acquired. Moreover, since the areas of the sensors S12 to S15 are smaller than those of the sensors S2 and S3 shown in FIGS. 4(a) to 4(c), the influence of unnecessary light such as stray light on the detection signals for the reflected light beams R1 and R2 can be suppressed, so that the object detection accuracy can be enhanced.

In Modification 1, the signal switching by the selector 205 is preferably performed at a timing other than the object detection period, that is, at a timing other than the period from the time when the light source 101 is caused to emit light in a pulsed manner to the time when a light reception signal is processed. For example, the signal switching by the selector 205 is preferably performed immediately before the light source 101 is caused to emit light in a pulsed manner. Accordingly, noise at the time of signal switching can be prevented from influencing the detection signals.

### <Modification 2>

In the above embodiment and Modification 1, the 0th-order diffracted light beam L0 and the ±1st-order diffracted light beams L1 and L2 obtained through the splitting by the diffraction grating 104 are projected to the target region. However, in Modification 2, the diffracted light beams used for projection are changed.

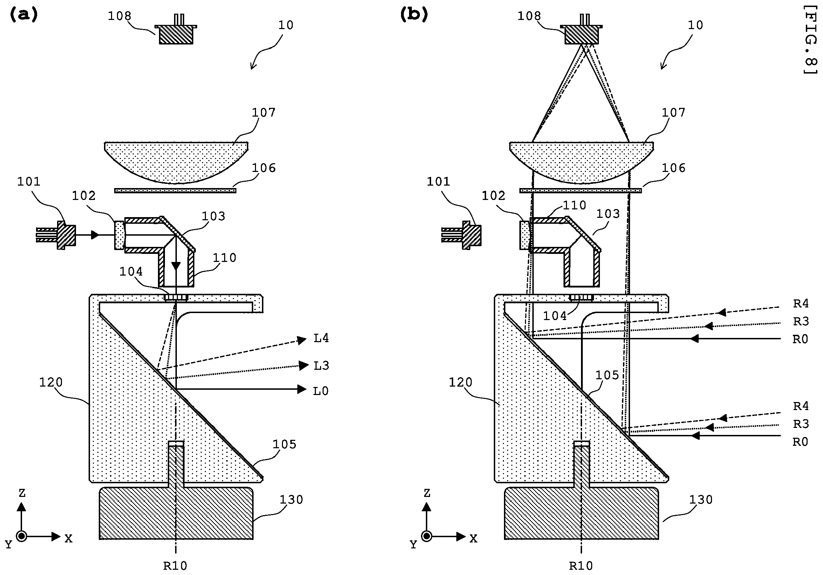

FIGS. 8(a) and 8(b) are each a cross-sectional view showing a configuration of the object detection device 10 according to Modification 2. FIGS. 8(a) and 8(b) shows cross-sections similar to those of FIGS. 2(a) and 2(b).

As shown in FIG. 8(a), in Modification 2, two orders of diffracted light beams having diffraction angles different from each other, with a Oth-order diffracted beam, are generated by the diffraction grating 104 and guided to the mirror 105. For example, the diffraction grating 104 is configured such that the diffraction efficiencies of the Oth-order diffracted light beam L0, a +lst-order diffracted light beam L3, and a +2nd-order diffracted light beam L4 are high, and the diffraction efficiencies of the other orders of diffracted light beams are substantially zero. The diffraction efficiencies of the 0th-order diffracted light beam L0, the +lst-order diffracted light beam L3, and the +2nd-order diffracted light beam L4 are set to be substantially equal. The diffraction grating 104 is composed of, for example, a blaze-type diffraction grating.

In this case, the Oth-order diffracted light beam L0, the +lst-order diffracted light beam L3, and the +2nd-order diffracted light beam L4 are used for object detection. However, a combination of diffracted light beams used for object detection is not limited thereto. For example, a Oth-order diffracted light beam, a +2nd-order diffracted light beam, and a +4th-order diffracted light beam may be used for object detection, or a Oth-order diffracted light beam, a +lst-order diffracted light beam, and a -2nd-order diffracted light beam may be used for object detection.

As shown in FIG. 8(b), in Modification 2, reflected light beams R0, R3, and R4 based on the Oth-order diffracted light beam L0, the +lst-order diffracted light beam L3, and the +2nd-order diffracted light beam L4 are incident on the mirror 105. In this case, the convergence positions of the reflected light beams R3 and R4 on the light receiving surface of the photodetector 108 are shifted relative to the convergence position of the reflected light beam R0 in one direction in accordance with the incident angles of the reflected light beams R3 and R4 on the mirror 105. Therefore, in Modification 2, the photodetector 108 is configured to be able to appropriately receive the reflected light beams R0, R3, and R4.

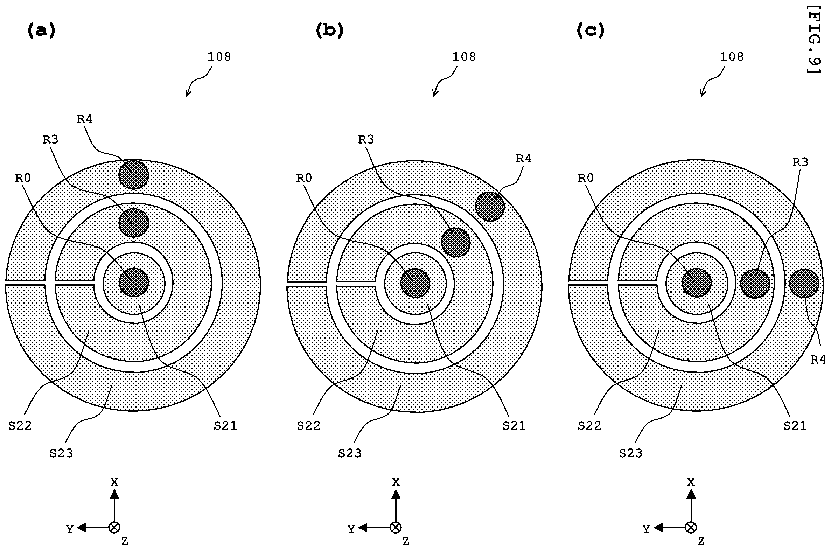

FIGS. 9(a) to 9(c) are each a diagram schematically showing a configuration of the photodetector 108 according to Modification 2 and a movement state of the reflected light beams R0, R3, and R4 of the respective diffracted light beams on the photodetector 108.

In Modification 2, a sensor S22 for receiving the reflected light beam R3 is disposed in an arc shape around a sensor S21 which receive the reflected light beam R0, and a sensor S23 for receiving the reflected light beam R4 is further disposed in an arc shape around the sensor S22. The sensors S22 and S23 are formed so as to extend along the movement loci of the reflected light beams R3 and R4, respectively.

In this configuration, since the sensors S22 and S23 are individually disposed for the reflected light beams R3 and R4, respectively, even when the rotation positions in the circumferential direction of the reflected light beams R3 and R4 are changed, detection signals from the sensors S22 and S23 can be used as detection signals for the reflected light beams R3 and R4 as they are. Therefore, in the configuration shown in FIG. 5, the controller 201 does not need to perform control, such as switching the detection signals from the sensors S22 and S23, in accordance with the rotation positions of the reflected light beams R3 and R4, that is, the rotation position of the mirror 105. Thus, the control can be simplified.

Also in Modification 2, for example, similar to FIGS. 6(a) to 6(f), each of the sensors S22 and S23 may be divided into a plurality of parts in the circumferential direction. In this case, the selector 205 is provided in the circuitry as shown in FIG. 7. The detection signals from the divided sensors S22 and S23 are selected in accordance with the positions of the reflected light beams R3 and R4, and detection signals for the reflected light beams R3 and R4 are generated, by the selector 205. According to this configuration, since the area of each divided sensor is decreased, the influence of unnecessary light such as stray light on the detection signals for the reflected light beams R3 and R4 can be suppressed as compared to the configuration in FIGS. 9(a) to 9(c). Therefore, the object detection accuracy can be enhanced.

Moreover, in the configuration in FIGS. 8(a) and 8(b), the number of diffracted light beams other than the Oth-order diffracted light beam L0 is two, but the number of diffracted light beams other than Oth-order diffracted light beam L0 may be one or may be three or more. In the case where the number of diffracted light beams other than the Oth-order diffracted light beam L0 is three, another sensor having an arc shape is disposed outside the sensor S23 shown in FIGS. 9(a) to 9(c). As described above, the number of sensors disposed outside the sensor S21 is set in accordance with the number of diffracted light beams other than the Oth-order diffracted light beam L0.

### <Modification 3>

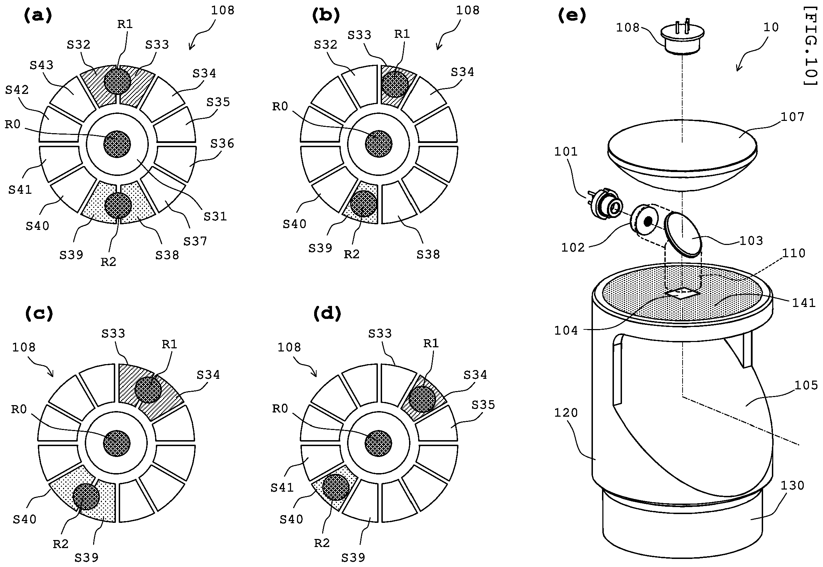

In Modification 1 described above, the number of divisions in the circumferential direction of the sensor for receiving the reflected light beams R1 and R2 is four. However, the number of divisions in the circumferential direction of the sensor for receiving the reflected light beams R1 and R2 may be three or may be five or more. For example, as shown in FIGS. 10(a) to 10(d), the photodetector 108 may include a sensor S31 which receives the reflected light beam R0, and 12 sensors S32 to S43 obtained by division in the circumferential direction as the sensor for receiving the reflected light beams R1 and R2.

In this case, each of detection signals for the reflected light beams R1 and R2 is acquired as a detection signal from one sensor or two adjacent sensors. In FIGS. 10(a) to 10(d), the sensors hatched by oblique lines are sensor for acquiring a detection signal for the reflected light beam R1, and the sensors hatched by dots are sensors for acquiring a detection signal for the reflected light beam R2. Similar to Modification 1 described above, selection and generation of detection signals are performed by the selector 205 under control of the controller 201.

According to the configuration of Modification 3, the areas of the sensors S32 to S43 can be further decreased as compared to Modification 1, and thus the influence of unnecessary light such as stray light on the detection signals for the reflected light beams R3 and R4 can be further suppressed. Therefore, the object detection accuracy can be further enhanced.

### <Modification 4>

FIG. 10(e) is a perspective view showing a configuration of the object detection device 10 according to Modification 4.

In Modification 4, the filter 106 in the above embodiment is omitted, and, instead, a filter 141 is mounted at the upper surface of the holder 120. Similar to the above filter 106, the filter 141 is a band pass filter that transmits light in the emission wavelength band of the light source 101 and that blocks light in the other wavelength bands. A rectangular opening is formed at the center of the filter 141, and the diffraction grating 104 is mounted at this opening. That is, in Modification 4, the filter 141 also serves as a support member for supporting the diffraction grating 104. The other configuration is the same as in the above embodiment.

According to the configuration of Modification 4, since the beam portion 121 shown in FIGS. 1(a) to 1(c) can be omitted, portions of the reflected light beams R0, R1, and R2 that are blocked by the beam portion 121 in the above embodiment can be guided to the photodetector 108. Therefore, more reflected light beams R0, R1, and R2 can be condensed on the photodetector 108.

The diffraction grating 104 does not have to be rectangular in a plan view and may be circular. In the case where the diffraction grating 104 is circular, the opening provided in the filter 141 to mount the diffraction grating 104 thereat is also adjusted to be circular. Accordingly, much more reflected light beams R0, R1, and R2 can be condensed on the photodetector 108.

### <Modification 5>

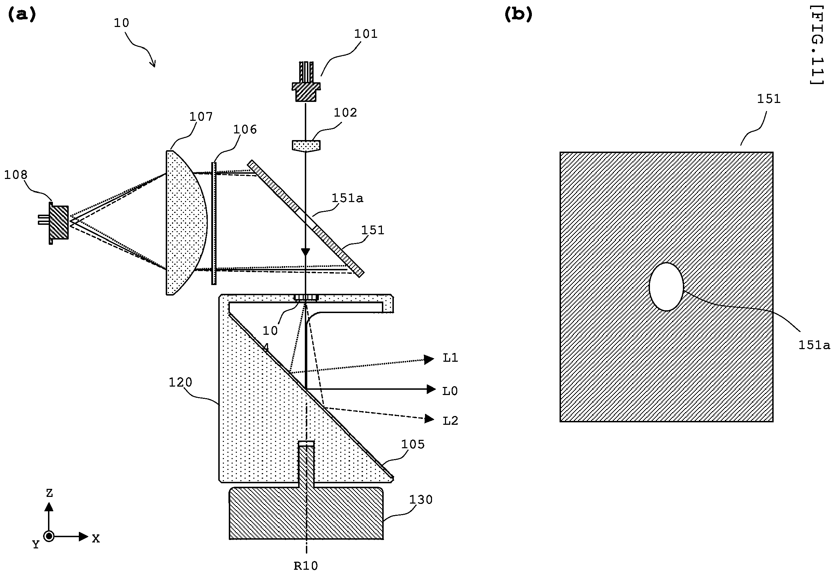

FIG. 11(a) is a cross-sectional view showing a configuration of the object detection device 10 according to Modification 5. FIG. 11(b) is a plan view schematically showing a configuration of an optical path switching mirror 151 according to Modification 5.

In Modification 5, the optical system composed of the light source 101 and the collimator lens 102 and the optical system composed of the filter 106, the condensing lens 107, and the photodetector 108 are interchanged with each other. In addition, the optical path switching mirror 151 for switching an optical path is disposed between both optical systems. The light source 101 is disposed such that the emission optical axis thereof is aligned with the rotation center axis R10. The optical path switching mirror 151 is provided with a hole 151a at the center thereof. The laser light converted into parallel light by the collimator lens 102 is incident on the diffraction grating 104 through the hole 151a. Thus, similar to the above embodiment, the 0th-order diffracted light beam L0, the +1st-order diffracted light beam L1, and the -1st-order diffracted light beam L2 are generated.

The reflected light beams, of the Oth-order diffracted light beam L0, the +1st-order diffracted light beam L1, and the -1st-order diffracted light beam L2, reflected from the target region are reflected by the mirror 105, similar to the above embodiment, and then reflected in the X-axis negative direction by the portion of the optical path switching mirror 151 other than the hole 151a. Thereafter, the reflected light beams are incident on the condensing lens 107 via the filter 106 and converged onto the light receiving surface of the photodetector 108 by the condensing lens 107. In this case as well, the convergence positions of the respective reflected light beams are shifted from each other in the Z-axis direction on the light receiving surface. The respective reflected light beams are received, for example, by the sensors S1, S2, and S3 in the configuration shown in FIGS. 4(a) to 4(c).

In Modification 5 as well, the same advantageous effects as those of the above embodiment can be achieved. Also in Modification 5, a tubular body may be provided between the hole 151a and the diffraction grating 104. Accordingly, the laser light reflected by the incident surface of the diffraction grating 104 can be prevented from being condensed on the photodetector 108 as it is.

### <Other Modifications>

In the above embodiment, the ±1st-order diffracted light beams L1 and L2 are used for object detection as the diffracted light beam other than the Oth-order diffracted light beam L0, but the diffracted light beams used for object detection are not limited thereto. For example, as the diffracted light beam other than the Oth-order diffracted light beam, ±2nd-order diffracted light beams may be used for object detection, or only a +lst-order diffracted light beam may be used for object detection. The number of diffracted light beams used for object detection is also not limited to three.

In the above embodiment, the direction of diffraction by the diffraction grating 104 is the direction parallel to the X-Z plane, at the neutral position shown in FIG. 2(a). However, the direction of diffraction by the diffraction grating 104 is not limited thereto. For example, the direction of diffraction by the diffraction grating 104 may be tilted at a predetermined angle relative to the X-Z plane at the neutral position shown in FIG. 2(a). To widen the object detection range in the vertical direction, the diffraction grating 104 preferably splits the laser light from the light source 101 such that the laser light beams obtained through the splitting are incident on the mirror 105 so as to be separated from each other in the direction parallel to the rotation center axis R10.

The sensor disposed around the sensor S1 which receives the reflected light beam R0 of the Oth-order diffracted light beam L0 does not necessarily have to have an arc shape, and may have another shape as long as the reflected light beams R1 and R2 can be received even when the reflected light beams R1 and R2 move. However, by forming the sensor disposed around the sensor S1 in an arc shape, the area of the sensor can be limited to an area corresponding to the movement loci of the reflected light beams, so that unnecessary light such as stray light can be inhibited from being incident on the sensor. Therefore, the detection accuracy of reflected light beams from an object can be enhanced.

The photodetector 108 does not necessarily have to have a configuration of having a predetermined sensor pattern, and may be an imaging element such as a CCD (Charge Coupled Device), or a two-dimensional PSD (Position Sensitive Detector). However, as described above, by using the photodetector 108 having a configuration of having a predetermined sensor pattern, the configuration and control can be simplified and the cost can be reduced.

The holder 120 and the mirror 105 may be integrally formed. For example, in the case where the holder 120 is formed from a metal material, the mirror 105 may be formed by performing mirror finish on the inclined surface of the holder 120.

The splitting element which splits light is not limited to the diffraction grating, and may be another element as long as the light from the light source can be split. Furthermore, in addition to the laser light source, an LED (light emitting diode) can also be used as the light source 101.

In the above embodiment and modifications, the presence/absence of an object in the projection direction as well as the distance to the object is measured. However, the object detection device 10 may be configured to detect only the presence/absence of an object in the projection direction.

In addition to the above, various modifications can be made as appropriate to the embodiments of the present invention, without departing from the scope of the technological idea defined by the claims.

### DESCRIPTION OF THE REFERENCE CHARACTERS

- 10: object detection device
- 104: diffraction grating (splitting element)
- 105: mirror
- 107: condensing lens
- 108: photodetector
- 120: holder
- 130: motor (drive unit)
- 201: controller
- S1 to S3: sensor
- S11 to S15: sensor
- S21 to S23: sensor
- S31 to S43: sensor

## Claims

1. An object detection device for detecting an object using light, the object detection device comprising:
a light source configured to emit light;
a splitting element configured to split the light emitted from the light source into a plurality of light beams;
a mirror configured to reflect the light beams obtained through the splitting by the splitting element;
a holder integrally holding the splitting element and the mirror;
a drive unit configured to rotate the holder;
a photodetector configured to receive reflected light beams, of the respective light beams, reflected from an object; and
a condensing lens configured to condense the reflected light beams of the respective light beams onto the photodetector.

2. The object detection device according to claim 1, wherein the splitting element is a diffraction grating.

3. The object detection device according to claim 2, wherein
the light from the light source is incident on the diffraction grating along a rotation center axis of the mirror,
a Oth-order diffracted light beam and at least one other order of diffracted light beam generated by the diffraction grating are reflected by the mirror and projected, and
the photodetector includes a sensor configured to receive a reflected light beam, of the Oth-order diffracted light beam, from the object, and at least one other sensor disposed around the sensor and configured to receive a reflected light beam, of the other order of diffracted light beam, from the object.

4. The object detection device according to claim 3, wherein the other sensor is disposed in an arc shape around the sensor configured to receive the reflected light beam of the Oth-order diffracted light beam, so as to extend along a movement locus of the reflected light beam of the other order of diffracted light beam rotating as the mirror rotates.

5. The object detection device according to claim 3 or 4, wherein
the diffraction grating generates a plurality of the other orders of diffracted light beams and guides the plurality of the other orders of diffracted light beams to the mirror, and
the photodetector includes the other sensor configured to receive the reflected light beams of the plurality of the other orders of diffracted light beams.

6. The object detection device according to claim 5, wherein
the diffraction grating generates ±nth (n is a positive integer) diffracted light beams and guides the ±nth diffracted light beams to the mirror, and
the other sensor configured to receive the reflected light beams of the ±nth diffracted light beams is divided into at least two parts in a movement direction of the reflected light beams.

7. The object detection device according to claim 5, wherein
the diffraction grating generates a plurality of predetermined orders of diffracted light beams having diffraction angles different from each other, with the Oth-order diffracted light beam, and guides the plurality of predetermined orders of diffracted light beams to the mirror, and
the other sensor is individually disposed for each of the reflected light beams of the predetermined orders of diffracted light beams rotating as the mirror rotates.

8. The object detection device according to claim 7, wherein the other sensor individually disposed for each of the reflected light beams of the predetermined orders of diffracted light beams is divided into at least two parts in a circumferential direction.

9. The object detection device according to claim 6 or 8, further comprising a controller configured to selectively switch the other sensor for acquiring a detection signal for each of the reflected light beams, as the reflected light beams move.

10. The object detection device according to any one of claims 1 to 9, wherein the splitting element splits the light from the light source such that light beams obtained through the splitting are incident on the mirror so as to be separated from each other in a direction parallel to the rotation center axis of the mirror.

11. A photodetector comprising:
a first sensor; and
a second sensor disposed in an arc shape around the first sensor.

12. The photodetector according to claim 11, further comprising a third sensor disposed in an arc shape around the second sensor.

13. The photodetector according to claim 11 or 12, wherein the sensors other than the first sensor are each divided into at least two parts in a circumferential direction around the first sensor.
